# EUROPEAN PATENT APPLICATION

(11) **EP 4 841 378 A1**
(43) Date of publication of application: **18.11.2026**
(21) Application number: 26176413.8
(22) Date of filing: 05.05.2026
(51) Int. Cl.: G05D 1/20

(54) **SYSTEM AND METHOD FOR SAFETY MONITORING**

(30) Priority: 15.05.2025 FI 20253194
(71) Applicant: Unikie Oy, 33720 Tampere (FI)
(72) Inventor: Sormunen, Toni, 33880 Lempäälä (FI)
(74) Representative: Moosedog Oy

(57) **Abstract**

The present disclosure provides a system (100) and a method (200) for safety monitoring of at least one vehicle (102) in an operational environment (OE). The system comprising a data acquisition module (110) comprising at least one data acquisition device (112) configured to acquire sensor data associated the at least one vehicle and one or more objects (104) positioned within the operational environment. The system further comprises a processing unit (120), communicably coupled to the data acquisition module via a communication interface (130), configured to pre-process the acquired sensor data to generate optimized sensor data, process the optimized sensor data via a consistency check algorithm to detect an anomaly within the optimized sensor data, and upon detection of the anomaly, and transmit an override command signal to a vehicle control unit (140) of the at least one vehicle based on the detected anomaly.

## Description

### FIELD OF INVENTION

The present disclosure relates to safety monitoring systems and more specifically, to a system and a method for safety monitoring of vehicles in an operational environment.

### BACKGROUND

The widespread adoption of autonomous systems in industrial environments, including factories, depots, and storage yards, has introduced new operational complexities that require innovative solutions. Autonomous vehicles deployed in such environments must navigate safely around both stationary and moving objects while maintaining high levels of operational efficiency and safety. Existing solutions, however, are often insufficient for ensuring the required level of system integrity, particularly in dynamic environments that are subject to frequent changes in layout or unexpected obstacles. The need for more advanced monitoring and control systems has become increasingly apparent as traditional solutions fail to address the multifaceted nature of these environments.

Conventional safety solutions or mechanisms, such as basic fail-safes, manual interventions, basic collision detection systems have proven to be inadequate in meeting the demands of autonomous vehicle operation in high-risk environments. Such systems typically lack the ability to assess system performance across the entire environment, which limits corresponding effectiveness in detection of emerging risks or system anomalies. Additionally, the reliance on limited, localized monitoring systems further exacerbates these challenges, as they do not provide a comprehensive solution for maintaining operational integrity. Currently, some solutions have been developed to overcome the aforementioned drawbacks. However, current solutions often focus on isolated aspects, such as hazard detection or emergency stop functions, without addressing the broader need for continuous, system-wide performance checks.

Therefore, in light of the foregoing discussion, there exists a need to overcome the aforementioned drawbacks associated with existing solutions and provide an improved safety monitoring system that provides continuous, integrated monitoring of system performance and ensures the autonomous operation of autonomous vehicles in complex, high-risk environments.

### SUMMARY

The aim of the present disclosure is to provide a system and a method to enable real-time safety monitoring of at least one vehicle operating in complex, high-risk operational environments. The aim of the present disclosure is achieved by a system and a method for safety monitoring of at least one vehicle in an operational environment, comprising a data acquisition module and a processing unit configured to process sensor data and transmit override signals based on detected anomalies. The embodiments of the present disclosure substantially enable to improve the safety, reliability, and real-time responsiveness of autonomous vehicles during operation.

The system performs continuous monitoring of system performance through consistency check algorithms and transmits emergency override signals when anomalies are detected. The system further enables a dynamic safety buffer around the vehicle by factoring in speed, trajectory, and obstacle information. The system adjusts vehicle behavior accordingly to avoid potential collisions. A performance monitoring unit enables periodic diagnostic checks, ensuring each data acquisition device remains functional. Additionally, a redundancy management unit ensures seamless operation even in the event of sensor or processing failures. The system enhances both autonomous safety and operational uptime by employing real-time anomaly detection and adaptive control responses.

Additional aspects, advantages, features, and objects of the present disclosure would be made apparent from the drawings and the detailed description of the illustrative embodiments constructed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic view of the system for safety monitoring of the at least one vehicle within the operational environment, in accordance with one or more embodiments of the present disclosure;
FIG. 2 is a schematic view of the safety monitoring system, in accordance with another embodiment of the present disclosure in accordance with one or more embodiments of the present disclosure;
FIG. 3 is another schematic view of the system for safety monitoring of the at least one vehicle in the operational environment, in accordance with one or more embodiments of the present disclosure., in accordance with one or more embodiments of the present disclosure; and

FIG. 4 is a diagrammatic flowchart depicting steps involved in a method for safety monitoring of at least one vehicle in an operational environment, in accordance with one or more embodiments of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system for safety monitoring of at least one vehicle in an operational environment, comprising:
- a data acquisition module comprising at least one data acquisition device configured to acquire sensor data associated the at least one vehicle and one or more objects positioned within the operational environment,
- a processing unit, communicably coupled to the data acquisition module via a communication interface, configured to:
   - pre-process the acquired sensor data to generate optimized sensor data,
   - process the optimized sensor data via a consistency check algorithm to detect an anomaly within the optimized sensor data, and upon detection of the anomaly,
   - transmit an override command signal to a vehicle control unit of the at least one vehicle based on the detected anomaly.

In another aspect, the present disclosure provides a method for safety monitoring of at least one vehicle in an operational environment, comprising:
- acquiring sensor data, via at least one data acquisition device, associated with the at least one vehicle and one or more objects positioned within the operational environment,
- pre-processing, via a processing unit communicably coupled to the data acquisition module through a communication interface, to generate the optimized sensor data,
- processing, via the processing unit, the optimized sensor data via a consistency check algorithm to detect an anomaly within the optimized sensor data, and upon detection of the anomaly,
- transmitting, via the processing unit, an override command signal to a vehicle control unit of the at least one vehicle based on the detected anomaly.

The present disclosure provides a system and a method for safety monitoring of at least one vehicle in an operational environment. The present disclosure outlines a comprehensive approach designed to enhance safety of the at least vehicle and the operational environment through advanced data acquisition and processing technologies.

Herein, the system (also known as, "safety monitoring system") integrates a network of strategically arranged data acquisition devices operable to continuously and dynamically obtain and thereby transmit operational data including, but not limited to, vehicle position and dynamics, structural maps, environmental conditions, information pertaining to potential obstructions and hazards to enable safe and efficient autonomous operation of the at least one vehicle, for example, autonomous vehicles, bots, etc. Additionally, the system is configured to validate the received data to dynamically identify potential anomalies that may be indicative of the system malfunction, potential hazards in to prevent any potential accidents during operation. Beneficially, the system and the method enhance real-time safety monitoring of the at least one vehicle by dynamically maintaining operational system integrity and preventing potential accidents or hazards.

Throughout the present disclosure, the term "operational environment" refers to geographical areas or physical settings wherein the system for safety monitoring of the at least one vehicle is implemented. For example, the operational environment includes, but is not limited to, smarts streets or highways, vehicle and logistics yards, bus depots, manufacturing plants, logistical depots, industrial areas, parking facilities, and so forth. Typically, the operational environment is populated with the one or more objects categorized as either a static object or a dynamic object, wherein the dynamic objects include, for example, the at least one vehicle, machinery, pedestrians, animals, etc., while the static objects include, for example, road barriers, building infrastructure, and other permanent or semi-permanent fixtures required to be identified for safe navigation of the at least one vehicle. Additionally, environmental conditions associated with the operational environment may significantly affect system performance, for example, variations in lighting (e.g., day, night, dusk, dawn), and weather variations (e.g., rain, fog, snow, clear skies) that may impact the functionality and accuracy of the data acquisition devices and/or the safety monitoring system of the present disclosure.

The system of the present disclosure comprises a data acquisition module, wherein the data acquisition module comprises at least one data acquisition device. Typically, the at least one data acquisition device is configured to acquire sensor data associated with at least one vehicle and one or more objects positioned within the operational environment.

Throughout the present disclosure, the term "data acquisition module" refers to a combination of hardware, software and firmware components configured to collect data via various data acquisition devices or sensors that may be arranged in or around the at least one vehicle and/or the operational environment. Alternatively stated, the data acquisition module is operable to gather raw sensor data, via the at least one data acquisition device, associated with the at least one vehicle, and/or the operational environment, and/or the one or more objects within the operational environment, to ensure accurate and efficient data transmission and further processing. Herein, the data acquisition module comprises at least one data acquisition device, i.e., the data acquisition module may contain a singular data acquisition device or multiple data acquisition devices based on the size of the operational environment. It will be appreciated that the number of data acquisition devices within the data acquisition module depends upon the implementational requirements and may be varied without any limitations to the present disclosure. Additionally, the data acquisition module may be configured with a node processing unit, or each of the at least one data acquisition device of the data acquisition module may be configured with a dedicated node processing unit for individually pre-processing the captured data before being transmitted for further processing.

Throughout the present disclosure, the term "data acquisition device" as used herein refers to sensor or scanning devices operable to provide raw sensor data, for example, perception data, and/or positioning data associated with the operational environment. Alternatively stated, the data acquisition device refers to a collection of one or more programmable and/or non-programmable components that are configured to capture data associated with the at least one vehicle, the one or more objects, or the operational environment such as, information descriptive of one or more physical features of the one or more objects, the at least one vehicle or the operational environment. Herein, the at least one data acquisition device of the data acquisition module is strategically arranged in a manner such that optimal coverage of the operational environment is achieved such as, by capturing different viewing angles, or the admixing of other known constraints for constructing a three-dimensional model, namely a point cloud map of the operational environment and the one or more objects present therein. Notably, to maximize coverage of the operational area and ensure accuracy of the collected data, the at least one data acquisition device are strategically installed within the operational environment, such as walls and ceilings, wherever optimally feasible. Moreover, in outdoor operational environments, or areas lacking suitable infrastructure, scaffolding structures, jigs, and pedestals may be deployed to position the at least one data acquisition device at optimal locations (height and position). Furthermore, the number and arrangement of the at least one data acquisition device is carefully tailored based on critical factors such as, but not limited to, dimensions of the operational environment, size, and movement of the one or more objects, and minimum detectable object size.

In one or more embodiments, the at least one data acquisition device includes, but is not limited to, one or more of a LiDAR (Light Detection and Ranging), a RADAR (Radio Detection and Ranging), 3D Scanner (Three-dimensional Scanner), a camera, an odometer, a proximity sensor, a GPS, an accelerometer, and a gyroscope. In an exemplary scenario, the at least one data acquisition device is a LiDAR sensor that transmits a light beam (or pulse) across the operational environment. Subsequently, the reflected light beam is processed to determine information related to the one or more objects within the operational environment, such as, dimensions of the one or more objects, distances from the one or more objects within the operational environment, etc.

The system further comprises a processing unit communicably coupled to the data acquisition module via a communication interface. Throughout the present disclosure, the term "processing unit" as used herein refers to a structure and/or module that includes programmable and/or non-programmable components configured to receive, store, process and/or share information and/or signals for safety monitoring of the at least one vehicle in the operational environment. Typically, the processing unit is operable to perform one or more operations for safety monitoring of the at least one vehicle within the operational environment. Further, it will be appreciated that the processing unit may be implemented as a hardware processor or a plurality of hardware processors, operating in a parallel or a distributed architecture. Optionally, the processing unit is implemented as a server or a plurality of servers, operating in a parallel or a distributed architecture. Optionally, the processing unit includes at least one of, but is not limited to, a microprocessor, a micro-controller, a complex instruction set computing (CISC) microprocessor, a reduced instruction set (RISC) microprocessor, a very long instruction word (VLIW) microprocessor, Field Programmable Gate Array (FPGA), advanced RISC Machine (ARM) processor, Decoupled Access-Execute (DAE) Processor, or any other type of processing circuit, for example as aforementioned. In the present examples, the processing unit may include components such as memory, processor(s), a network adapter, and the like, to store, process and/or share information with other computing components, such as a data acquisition device or module, a current sensor, a voltage sensor, a remote processing unit, a database, a user interface, a user device, a remote server, and the like. Optionally, the processor is supplemented with additional computation systems, such as neural networks, and hierarchical clusters of pseudo-analog variable state machines implementing artificial intelligence algorithms. Optionally, the processor is implemented as a computer program that provides various services (such as database services) to other devices, modules, or apparatuses. The processor may be arranged in various architectures for responding to and processing the instructions for any intended operation. Typically, the processing unit is configured to handle large volumes of data efficiently, ensuring timely and accurate data processing for real-time applications. It will be appreciated that the processing unit can be implemented in several ways depending on specific needs and infrastructure. In an example, the processing unit may include a dedicated anomaly detection module and an override command transmission module to enable the system to monitor the safety of the at least one vehicle in the operational environment. In another example, the processing unit may be distributed across multiple devices in a distributed computing arrangement. In yet another example, the processing unit may include a cloud server, leveraging cloud computing resources to perform its functions.

In an exemplary scenario, the processing unit may integrate key functions to support autonomous vehicle navigation, for example, utilizing a navigation map to identify and navigate drivable areas while employing planning tools and adhering to established driving rules. Additionally, the processing unit may include a mission management module configured to control the trajectory of the at least one, including real-time adjustments to the route in response to environmental interruptions or system errors. Furthermore, the mission management module may be configured to modify a current trajectory by utilization of, for example, path planning and collision avoidance algorithms, to ensure safety of the at least one vehicle during operation in the operational environment. The processing unit may further include continuous monitoring and response algorithms or systems that may implement odometry fusion and path tracking techniques to refine positional accuracy and maintenance of the at least one vehicle on its intended path with dynamic adjustments made based on real-time operational data. Collectively, the integrated functions of the processing unit manage and execute complex navigation tasks effectively, ensuring safety and efficiency during operation.

Throughout the present disclosure, the term "communication interface" as used herein refers to a communication mechanism adopted for data transmission between different components of the autonomous system, such as, the data acquisition module and the at least one data acquisition device, the processing unit, and the at least one vehicle. Notably, the components of the system are in communication with each other via the communication interface to ensure seamless integration of sensor data, processing thereof, and vehicle control based thereon. The communication interface enables seamless integration of dynamic processing and/or analysis of acquisitioned data and corresponding vehicular control of the at least one vehicle in real-time. The communication interface may include, for example, ethernet or automotive ethernet, Controller Area Network (CAN), Serial Peripheral Interface (SPI), inter-integrated circuit (I2C), Peripheral Component Interconnect (PCI), PCI express (PCIe), Universal Asynchronous Receiver/ Transmitter (UART), Universal Serial Bus (USB), or other serial interfaces, for high-speed, high-bandwidth large-scale data transmission between the system and elements thereof. It will be appreciated that the communication interface may be associated with an individual network, or a collection of individual networks that are interconnected with each other to function as a single large network. The communication interface may include different types of elements configured for either wired transmission, or wireless transmission, or a combination of both, to provide flexible integration options suitable for various operational requirements. The network infrastructure encompasses a range of network types, including Local Area Networks (LANs), Wide Area Networks (WANs), Metropolitan Area Networks (MANs), Wireless LANs (WLANs), Wireless WANs (WWANs), Wireless MANs (WMANs), the Internet, , wireless sensor communication channel (WSN), a cloud communication channel, a Metropolitan Area Communication channel (MAN), and/or the Internet. Optionally, the communication interface comprises one or more of a wired connection, a wireless network, cellular networks such as 2G, 3G, 4G, 5G mobile networks, and a Zigbee connection, and various radio and telecommunication networks, as well as Worldwide Interoperability for Microwave Access (WiMAX) networks.

The processing unit is configured to pre-process the acquired sensor data to generate optimized sensor data. Typically, during the pre-processing phase, the sensor data acquired from the at least one data acquisition device of the data acquisition module is processed via one or more data processing algorithms to modify the acquired sensor data into an optimized computer-readable format i.e., the optimized sensor data. The one or more data processing algorithms may be operable for data extraction, compression, filtration, downsampling, calibration, segmentation, re-organization, extrapolation and/or analysis. Specifically, the data processing algorithms may include at least one of noise reduction, signal filtering (for example, bilateral filtering, Kalman filtering), statistical outlier removal (SOR), point-cloud down sampling and compression (for example, voxel grid filtering, octree based compression, principal component analysis, etc.), sensor data calibration or alignment (for example, extrinsic calibration, time synchronization, intensity-based correction (for example, adaptive intensity normalization) and reflectivity adjustment (for example, weather compensation algorithms), object segmentation or clustering (for example, Euclidean clustering, DBSCAN, etc.), feature extraction (ground plane estimation, edge and surface detection, etc.), and so forth. It will be appreciated that the processing unit may employ any number of data processing algorithms or techniques to generate the optimized sensor data, and the employed data processing algorithms may be varied depending upon the implementational requirements without any limitations to the present disclosure.

In an exemplary scenario of the system for safety monitoring of the at least one vehicle implemented in the operational environment, the acquired sensor data (i.e., the raw LiDAR data) contains noise due to reflective surfaces (e.g., glass windows). Herein, a statistical outlier removal algorithm is utilized by the processing unit to ensure only valid obstacles are considered. Further, voxel grid filtering is utilized to reduce the data density to allowing real-time processing for obstacle avoidance. In another exemplary scenario, the operational environment includes one or more LiDAR sensors arranged at an intersection to capture vehicle and pedestrian movements. Herein, a DBSCAN clustering groups data points into identifiable road users, improving tracking accuracy. In yet another exemplary scenario, wherein the at least one vehicle is a warehouse robot navigating through the operational environment (or warehouse) having aisles, shelves, walls and one or more mobile objects, by utilization of ground plane estimation, ensuring that shelves and walls are distinguished from mobile objects like forklifts.

The term "optimized sensor data" refers to a refined and enhanced representation of raw sensor inputs operable to improve accuracy, reliability, and computational efficiency of the system for safety monitoring for downstream applications such as, but not limited to, object detection, sensor fusion, and autonomous navigation. Alternatively stated, the optimized sensor data refers to the filtered, corrected, and structured form of raw sensor inputs from the at least one data acquisition device, ensuring that only relevant and high-quality information is utilized for decision-making processes via the system. Herein, the pre-processing enhances the accuracy of the acquired sensor data by reducing noise and artifacts therein, improves computational efficiency by eliminating redundant data, and ensures sensor consistency by aligning data from multiple sources to effectively compensate for environmental interferences, such as fog, rain, or occlusions. In an example, the underlined optimization w.r.t the optimized sensor data may involve data extraction and compression of the acquired sensor data to reduce size thereof, for example, by eliminating redundant elements (not relevant to the operational environment or the one or more objects) to enhance efficiency and accuracy in subsequent processing pipeline. The processing unit enhances the acquired sensor data through pre-processing techniques or algorithms to enhance computational efficiency, accuracy, and robustness, enabling precise object detection, mapping, and navigation of the at least one vehicle within the operational environment. It will be appreciated that although the pre-processing step as explained herein is performed by the processing unit, however, the pre-processing step may also be executed by the data acquisition module or a dedicated pre-processing module, without any limitations to the present disclosure.

The processing unit is further configured to process the optimized sensor data via a consistency check algorithm to detect an anomaly within the optimized sensor data. The term "anomaly" refers to a deviation in the sensor data acquired via the at least one data acquisition device beyond predefined safety thresholds or limits. The anomaly may be indicative of potential sensor drift, misalignment, or failure. For example, a GPS signal drift exceeding ±5 meters, LiDAR misalignment resulting in a 5° angular deviation, or inertial measurement unit (IMU)-reported acceleration spikes beyond ±3g. Upon pre-processing the acquired sensor data via the processing unit, the optimized sensor data is subjected to the consistency check algorithm specifically designed to identify anomalies or discrepancies, within the acquired sensor data, indicative of operational problems such as, but not limited to, GPS signal drift, LiDAR misalignment, sensor dropout, spatial or temporal inconsistency associated with the sensor data.

Throughout the present disclosure, term "consistency check algorithm" as used herein refers to advanced anomaly detection algorithms configured to process and/or analyze the optimized sensor data to determine one or more anomalies therein. The consistency check algorithm may involve data verification and/or processing algorithms to ensure that the one or more (sensor or operational) anomalies such as GPS drift, LiDAR misalignment, and sensor dropout are promptly detected and addressed, thereby mitigating safety risks in autonomous and semi-autonomous operational environments. Notably, the consistency check algorithm (or mechanism) employed by the processing unit is configured for provision of critical safeguards. For instance, when environmental factors such as rain, wind, fog, pollution, sandstorms, heavy snowfall, or volcanic ash cause sensor readings to deviate from established thresholds, the processing unit identifies such discrepancies as anomalies.

In an embodiment, the consistency check algorithm includes a spatial consistency verification algorithm to verify spatial correlation(s) between multiple data acquisition devices, such as LiDAR depth measurements and camera object detection. In an example, the discrepancies between expected positions of the one or more objects as detected by two data acquisition devices are analyzed using Euclidean distance calculations, wherein large inconsistencies indicate potential sensor drift or misalignment, thereby triggering anomaly detection.

In another embodiment, the consistency check algorithm includes GPS signal drift detection. The processing unit employs statistical analysis and real-time correction techniques to verify the accuracy of GPS coordinates. For example, techniques such as Doppler shift correction and satellite geometry analysis are used to detect drift beyond acceptable margins. Upon detecting GPS drift, the processing unit may cross-reference with IMU and LiDAR data to determine the extent of the anomaly.

In yet another embodiment, the consistency check algorithm includes LiDAR misalignment metection. The acquired sensor (or point cloud) data from LiDAR sensors are analyzed for irregularities using feature matching algorithms. For example, if detected objects exhibit displacement inconsistencies across multiple LiDAR scans, a sensor misalignment is inferred.

In an embodiment, to detect the anomaly via the consistency check algorithm, the processing unit is configured to compare the optimized sensor data against a predefined sensor threshold. The term "predefined sensor threshold" as used herein refers to a deviation threshold determined based on historical sensor data associated with the at least one data acquisition device. Alternatively stated, the predefined sensor threshold refers to a predetermined upper or lower limit of acquired sensor data (values) based on operational safety parameters. For example, the predefined sensor threshold may be a LiDAR intensity threshold of 100-255 for reliable object detection, or an IMU acceleration threshold of ±2g for normal driving conditions. It will be appreciated that the predefined sensor threshold may vary depending upon the implementation and may be varied for any type of data acquisition device without any limitations.

In another embodiment, to detect the anomaly via the consistency check algorithm, the processing unit is further configured to compare the optimized sensor data against a predefined reference data. The term "predefined reference data" as used herein refers to stored sensor data representing an expected range of values under normal operating conditions associated with the at least one vehicle. For example, the predefined reference data may be an expected acceleration (10 metre per second square) or speed (e.g., 20 m/s), of the at least one vehicle within the operational environment, or expected speed variation ±2 m/s, under stable conditions. In operation, the processing unit compares the optimized sensor data against either the predefined sensor threshold or the predefined reference data to determine whether the acquired data is within acceptable limits. Correspondingly, if the optimized sensor data deviates beyond acceptable limits, an anomaly is detected and flagged for further analysis.

In yet another embodiment, to detect the anomaly via the consistency check algorithm, the processing unit is further configured to cross-validate the optimized sensor data associated with the at least one data acquisition device against sensor data from another data acquisition device. Typically, the processing unit cross-validates the optimized sensor data obtained from the at least one data acquisition device against sensor data from another data acquisition device (operating separately from the at least one data acquisition device). The processing unit is configured to compare redundant sensor inputs, such as GPS, LiDAR, and/or inertial measurement units (IMUs), to detect inconsistencies. The cross-validation involves analyzing discrepancies between corresponding sensor readings to ensure coherence and detect anomalies. For example, comparing LiDAR-detected object distances with radar-detected distances within a tolerance of ±10 cm, or verifying IMU-derived roll angle against GPS-derived heading with a maximum deviation of ±2 degrees. To enable such comparison, the processing unit may utilize a pre-define deviation threshold for expected sensor readings based on historical and real-time data. Thus, if a given sensor reading deviates beyond the predefined threshold, the processing unit flags the deviation as an anomaly for further analysis.

In an embodiment, to cross-validate the optimized sensor data, the processing unit is further configured to determine, via the sensor data from the at least one data acquisition device, a current state of the at least one vehicle, determine, via second sensor data acquired by a second data acquisition device, a second current state of the at least one vehicle, and compare the current state of the at least one vehicle against the second current state to detect anomaly therein. The current state of the at least one vehicle is determined using sensor data acquired from the at least one data acquisition device, whereas the second current state of the vehicle using second sensor data from a second data acquisition device. The term "current state" as used herein refers to real-time operational parameters of the at least one vehicle obtained using the acquired sensor data from a given data acquisition device including position, orientation, and velocity thereof. For example, the current state may be a GPS-reported latitude/longitude coordinate of 37° N, 122° W, an IMU-detected pitch angle of 2.5° with a drift rate of 0.01°/s, and a LiDAR-based velocity estimation of 45 km/h. To enable cross-validation, the second data acquisition device is configured to acquired second sensor data to verify the previously determined current state of the at least one vehicle. For example, a LiDAR-derived position of the at least one vehicle compared with an IMU-integrated position estimation with an allowable error of ±0.2 m over 10 seconds, or a GPS-derived heading compared with a magnetometer-derived heading with an alignment tolerance of ±1.5°. The system compares the current state of the vehicle against the second current state to detect inconsistencies that may indicate an anomaly. In an exemplary scenario, if the speed of the at least one vehicle as detected by the at least one data acquisition device (e.g., GPS) is 50 km/h, while the speed of the at least one vehicle as detected by the second data acquisition device (e.g., wheel speed sensor) is 30 km/h, and exceeding a predefined deviation threshold of ±5 km/h, an anomaly is detected by the processing unit. In another example, if the yaw rate of the at least one vehicle as detected by the at least one data acquisition device (e.g., LiDAR) differs from the yaw rate of the at least one vehicle as detected by the second data acquisition device (e.g., IMU) by more than ±3°/s.

In an embodiment, the processing unit is further configured to determine, via a third data acquisition device, a third current state of the at least one vehicle. The processing unit is further configured to compare the third current state against the current state of the at least one vehicle to detect the anomaly, and if detected, flag the associated at least one data acquisition device for manual inspection.

In one or more embodiments, the at least one data acquisition device is operatively coupled to a voltage sensor configured to measure voltage levels (V) associated therewith, wherein the processing unit is configured to compare the measured voltage level associated with each of the at least one data acquisition device against a predefined voltage threshold range and based on the comparison, determine an operational status of the at least one data acquisition device, wherein the operational status is one of active, partially active, or inactive. The voltage sensor is operable to monitor electrical potential supplied to, or consumed by, the at least one data acquisition device. The voltage sensor continuously measures and reports voltage levels to the processing unit, for example, to assess the stability and reliability of power supply. The term "predefined voltage threshold range" refers to the acceptable operational voltage limits required for proper functionality of the at least one data acquisition device. For example, the voltage threshold range for a GPS module may be in a range of 3.0 Volts (V) to 3.6V. In another example, the voltage threshold range for a radar sensor may be in a range of 4.8V to 5.2V.

The processing unit compares the real-time voltage readings detected by the voltage sensor against these predefined voltage thresholds to determine the operational status of the associated data acquisition device. In an embodiment, the operational status of the at least one data acquisition device may be categorized as active i.e., the data acquisition device functions within the predefined voltage threshold range and provides valid sensor data. For example, a LiDAR sensor receiving 11.8V to 12.2V and generating reliable point cloud data. In another embodiment, the operational status of the at least one data acquisition device is partially active. The at least one data acquisition device may experience voltage fluctuations that may degrade sensor data accuracy, for example, an IMU voltage intermittently dropping below 3.3V, causing occasional sensor dropout or drift. In yet another embodiment, the operational status of the at least one data acquisition device is inactive. The at least one data acquisition device may become inactive or non-functional due to a voltage drop or spike beyond the predefine voltage threshold range or on account of complete power loss. For example, a radar sensor failing to operate due to a detected voltage of 0V or a LiDAR sensor misfiring due to power instability below 10.5V. If a device is determined to be partially active or inactive, the system may generate an anomaly signal and trigger corrective measures.

In one or more embodiments, the processing unit is further configured to analyze the detected anomaly to determine at least one of a type and a severity of the detected anomaly, and wherein the detected anomaly includes at least one of: a signal drift, a sensor misalignment, and a sensor dropout. The processing unit analyzes the detected anomaly to determine at least one of: the type of the anomaly for categorization of the nature of anomaly (or issue), for example, signal drift, sensor misalignment, or sensor dropout and the severity of the anomaly for assessment of the extent of deviation from normal sensor behavior (e.g., minor fluctuation vs. complete sensor failure). In an exemplary scenario, the processing unit identifies anomalies using multi-sensor data fusion and consistency checks. For example, the detected type of anomaly may be a signal drift i.e., a gradual deviation in sensor readings from expected values due to calibration errors or environmental factors. In an example, a GPS drift exceeding 5m, potentially caused by multipath interference or satellite positioning errors or an IMU-reported yaw rate divergence of more than 3°/s from the expected vehicle trajectory, indicative of drift-related sensor bias. In another example, the detected type of anomaly may be a sensor misalignment indicative of a systematic error due to incorrect sensor orientation or mounting shifts, for example, LiDAR misalignment causing a 5° angular deviation, leading to distorted depth perception, or camera offset shifting detected lane markings by more than 15 cm, affecting lane-keeping decisions associated with the at least one vehicle. In yet another example, the detected type of anomaly may be a sensor dropout i.e., a temporary or permanent loss of sensor data, leading to incomplete or unreliable perception such as, IMU signal loss for more than 500ms, potentially disrupting vehicle motion estimation, or LiDAR failing to return valid distance measurements for more than 1 second, leading to missing obstacle detections.

Optionally, the severity of the anomaly is classified based on the extent of deviation and associated potential impact during operation of the at least one vehicle. In an example, a low severity for minor discrepancies that can be corrected through software-based compensation (e.g., IMU drift within ±0.5°/s, which can be recalibrated). In another example, a moderate severity for deviations that require sensor redundancy for validation (e.g., LiDAR misalignment exceeding 3° but still within acceptable tolerance when cross-validated with sensor data from another data acquisition device). In yet another example, a high severity for critical sensor failures requiring immediate intervention (e.g., complete GPS signal loss for more than 2 seconds, triggering fallback localization methods). Beneficially, via systematic analysis and categorization of the detected anomalies, the system of the present disclosure ensures real-time anomaly detection, classification, and corresponding corrective action(s), thereby enhancing the reliability and safety of the at least one vehicle while simultaneously improving perception and control within the operational environment.

The processing unit is further configured to transmit an override command signal to a vehicle control unit of the at least one vehicle based on the detected anomaly. The processing unit is configured to transmit the override command signal via the communication interface in real-time to enable dynamic adjustments of operational parameters associated with the at least one vehicle. The term "vehicle control unit" as used herein refers to an electronic control module responsible for executing the override command signal and adjusting behavior of the at least one vehicle accordingly. For example, the vehicle control unit (VCU) may be an Electronic Stability Control (ESC) module reducing speed when an anomaly is detected. The vehicle control unit is operatively coupled with the at least one vehicle via the communication interface and configured to execute the override command signal based on the detected anomaly. For example, the vehicle control unit executes braking interventions when an object or obstacle distance from the at least one vehicle drops below 1.5 m. In another example, the vehicle control unit engages emergency lane-keeping if a heading divergence exceeds ±5° as detected by the at least one data acquisition device (e.g., GPS and IMU) for a duration of 2 seconds or more.

The override command signal may instruct the at least one vehicle to slow down, halt, or engage an alternative control mode depending on the severity of the detected anomaly to ensure that erroneous sensor data does not lead to unsafe manoeuvres of the at least one vehicle. Notably, the system upon detecting any critical system failure, communication breakdown, or hazardous condition, initiates immediate action(s) to prevent potential accidents or minimize damage. Through such a proactive approach, integrity and safety of the at least one vehicle is ensured in a reliable and effective manner.

In one or more embodiments, upon detection of the anomaly, the processing unit is further configured to identify the at least one data acquisition device associated with the detected anomaly, determine a root cause of the detected anomaly based on at least one of the type of the anomaly, location and number of the at least one data acquisition device associated with the detected anomaly, and trigger either a corrective signal or the override command signal based on the determined root cause. In an embodiment, the triggered corrective signal is configured to initiate at least one of power cycling of the at least one data acquisition device and resetting thereof, and the override command signal is configured to either initiate an emergency braking action to halt the at least one vehicle or alter a current state thereof. The processing unit determines whether the detected anomaly affects a single sensor or multiple sensors, which helps isolate the root cause. In case of a single-sensor failure, such as, a GPS module shows drift, associated root cause is likely GPS-specific interference or antenna obstruction, or a LiDAR unit fails to respond, then the associated root cause may be power loss, laser degradation, or environmental obstruction (e.g., dirt or fog). Further, in case of multiple-sensor failure i.e., simultaneous failures in LiDAR, IMU, and GPS, the associated root cause may be a central power supply issue affecting all sensors. In another example, multiple sensors on the same communication interface (e.g., CAN bus or Ethernet) failing together suggests network congestion, interference, or a hardware fault in the communication interface. Thus, based on the identified root cause, if noncritical and correctable through software adjustments, the corrective signal is transmitted to recalibrate or reconfigure the affected sensor(s). However, if the identified root cause poses a safety risk (e.g., complete sensor failure, major drift, or power loss), the override command signal is transmitted to the vehicle control unit. For example, immediate vehicle halt if GPS, IMU, and wheel encoders all fail, leading to a loss of position estimation. In another example, activating emergency braking if LiDAR and radar fail to detect obstacles within a critical distance (e.g., below 1.5 m). By systematically identifying affected sensors, diagnosing root causes, and triggering appropriate responses, the system ensures robust anomaly resolution, minimal false alarms, and enhanced vehicle safety during operation within the operational environment.

In one or more embodiments, the system further comprises a performance monitoring unit, communicably coupled to the at least one data acquisition device via the communication interface, configured to transmit, periodically, a diagnostic signal to the at least one data acquisition device, determine a response time associated with the transmitted diagnostic signal, and compare the response time against a predefined time threshold to detect an anomaly with the associated data acquisition device from the at least one data acquisition device. The term "diagnostic signal" refers to a test (or heartbeat) signal sent by the performance monitoring unit to assess the operational health of the at least one data acquisition device. The term "predefined time threshold" refers to the acceptable upper limit for sensor response time under normal conditions. For example, the time threshold for an IMU may be 10ms, LiDAR expected response within 20ms. The performance monitoring unit continuously monitors a status or health of the at least one data acquisition device via the diagnostic (or heartbeat) signals. The diagnostic signal is transmitted periodically (e.g., every 10ms for real-time monitoring, or every 1 second for routine diagnostics) to ensure continuous sensor performance evaluation. The performance monitoring unit measures the response time as an indicator of sensor performance degradation or failure. For example, a LiDAR unit responding with a delay exceeding 50ms, which may indicate processing overload, or a GPS module failing to respond within 500ms, suggesting a potential signal loss or module failure. The performance monitoring unit compares the measured response time against the predefined threshold to detect anomalies. For example, an increased response time (e.g., LiDAR responding in 80ms instead of 20ms) indicates sensor degradation due to overheating or processing delays. In another example, no response received (e.g., GPS failing to acknowledge the diagnostic signal within 500 ms) indicates sensor malfunction or power loss.

In one or more embodiments, the performance monitoring unit is further configured to transmit a diagnostic signal to the at least one data acquisition device, receive and process the diagnostic signal reverted from the at least one data acquisition device to determine one or more signal parameters associated therewith, wherein the one or more signal parameters include at least one of a signal strength ratio and a packet loss rate, and compare the one or more signal parameters against a corresponding predefined signal threshold to detect the anomaly. Upon receiving the diagnostic signal, the at least one data acquisition data acquisition device transmits a reverted signal back to the performance monitoring unit, allowing analysis of signal integrity. The performance monitoring extracts key signal parameters, including signal strength ratio (SSR) and packet loss rate (PLR), to assess potential obstructions or degradation of the at least one data acquisition device, wherein a reduced SSR may indicate sensor obstruction or environmental interference and an increased PLR may indicate sensor degradation, communication interference, or hardware failure. For example, a LiDAR unit experiencing an SSR drop below 80%, which could indicate dust accumulation or physical blockage. In another example, a GPS receiver showing an SSR of 50%, suggesting poor satellite visibility due to urban canyons or tunnels. In another example, a radar sensor experiencing a PLR of 10%, suggesting interference from other RF sources. In yet another example, a LiDAR unit showing a PLR of 20%, indicating processing overload or failing optical components. Beneficially, the continuous monitoring of the response time, or SSR, or PLR, of the at least one data acquisition device via the performance monitoring unit ensures early detection of sensor degradation, obstructions, and failures, allowing proactive corrective actions to maintain safety and operational reliability of the at least one vehicle.

In one or more embodiments, the processing unit is further configured to associate a timestamp with the detected anomaly, aggregate the detected anomaly and the associated timestamp in a database to generate log data, process the log data via at least one machine learning algorithm to identify anomalistic patterns therein, and utilize the identified anomalistic patterns to detect the anomaly in a given sensor data. Notably, each detected anomaly is associated with a timestamp and thereby stored in the database. Subsequently, the processing unit is configured to analyze the sensor data to identify anomalistic patterns that may be utilized to manage future anomalies effectively. Furthermore, the processing unit logs each incident for detailed post-event analysis while simultaneously alerting maintenance and operational teams to initiate diagnostics and corrective measures. In an example, an autonomous system deployed in industrial yards, depots, and factories integrates multiple data acquisition devices, including LiDAR, radar, GPS/GNSS, odometry, and cameras, to ensure precise monitoring and operational safety. Consequently, the processing unit detects anomalies such as GPS drift, radar false positives, sensor misalignment, and voltage fluctuations and associates a timestamp with each detected anomaly. Furthermore, the processing unit aggregates anomalies and corresponding timestamps into a structured database to generate the log data to enable further analysis. Typically, machine learning algorithms may be utilized to process the log data to identify anomalistic patterns, such as frequent sensor dropouts or location-specific signal interferences. Beneficially, such an implementation enables leveraging the identified anomalistic patterns to enhance real-time anomaly detection and enables proactive fault mitigation through automated corrective actions such as, recalibration, power cycling, or sensor redundancy activation.

In one or more embodiments, the system further comprises a redundancy management unit configured to switch the at least one data acquisition device associated with the detected anomaly with one or more backup data acquisition devices or supplement one or more backup data acquisition devices to the at least one data acquisition device. The term "redundancy management unit" as used herein refers to an integrated hardware and software framework operable ensure system performance despite one or more faults or anomalies being encountered. Upon detecting the anomaly, the redundancy management unit determines the necessary redundancy strategy, which includes ensuring continuity by switching to alternative subsystems via the redundancy management unit in the event of a component failure, to maintain safe and seamless operational integrity. Typically, the redundancy management unit enhances system reliability by employing redundant components, such as backup sensors, controllers, and actuators, which automatically take over when a primary component fails. As a result, operational continuity is maintained without interruptions, ensuring seamless functionality. In addition to component redundancy, the framework integrates fail-safe mechanisms, such as controlled braking or speed reduction, or redundancy mechanisms to ensures continued operation by switching to the redundant processing unit, server, or system. To further improve robustness, the redundancy management unit utilizes both homogeneous redundancies, involving identical backup components, and heterogeneous redundancy, incorporating diverse backup technologies for greater resilience. Moreover, advanced decision-making logic, powered by artificial intelligence (AI) and sensor fusion, may be utilized to continuously analyse real-time diagnostics to determine whether restoring the primary system or activating an alternative control strategy would be the most effective course of action. In an example, the redundancy management unit enhances vehicle perception through multi-sensor redundancy, ensuring continuous and reliable data acquisition. Specifically, overlapping fields of view from multiple LIDAR sensors, strategically positioned on the front, rear, and sides of the vehicle, provide redundant coverage. As a result, when a given data acquisition device becomes inactive or partially active on account of obstructions due to dirt, fog, or physical blockage, sensor data from adjacent data acquisition devices seamlessly compensate for the loss, minimizing blind spots and improving perception accuracy. Furthermore, combining long-range and short-range data acquisition devices strengthens redundancy by offering diverse capabilities. Specifically, long-range data acquisition devices capable of detecting objects, for example over 200 meters away, enhance situational awareness at high speeds, while short-range data acquisition devices, covering, for example 30-50 meters, ensure detailed environmental perception for manoeuvring complex driving scenarios. In cases where long-range LIDAR becomes compromised due to adverse weather conditions, short-range sensors continue supplying critical data, allowing the vehicle to make safe operational decisions. In another example, multiple processing units enhance computational redundancy, preventing decision-making failures. LIDAR data processing is distributed across multiple Node Processing Units (NPUs) or Graphics Processing Units (GPUs), ensuring that if one unit fails, another seamlessly takes over, maintaining uninterrupted vehicle operation. Additionally, parallel data processing introduces an extra layer of redundancy by employing multiple algorithms such as, Kalman Filter, Iterative Closest Point (ICP), and deep learning-based object detection, simultaneously. By integrating multiple layers of redundancy, the system maintains robust perception, enhancing safety and reliability across various driving conditions associated with the at least one vehicle.

The present disclosure also relates to the method for safety monitoring of at least one vehicle in an operational environment as described above. Various embodiments and variants disclosed above with respect to the aforementioned system for safety monitoring of at least one vehicle in an operational environment, apply mutatis mutandis to the method.

In another aspect, the present disclosure provides a method for safety monitoring of at least one vehicle in an operational environment, comprising:
- acquiring sensor data, via at least one data acquisition device, associated with the at least one vehicle and one or more objects positioned within the operational environment,
- pre-processing, via a processing unit communicably coupled to the data acquisition module through a communication interface, to generate the optimized sensor data,
- processing, via the processing unit, the optimized sensor data via a consistency check algorithm to detect an anomaly within the optimized sensor data, and upon detection of the anomaly,
- transmitting, via the processing unit, an override command signal to a vehicle control unit of the at least one vehicle based on the detected anomaly.

In one or more embodiments, processing the optimized sensor data to detect the anomaly comprises comparing the optimized sensor data against a predefined sensor threshold, or comparing the optimized sensor data against a predefined reference data, or cross-validating the optimized sensor data associated with the at least one data acquisition device against sensor data from another data acquisition device.

In one or more embodiments, cross-validating the optimized sensor data comprises determining, via the sensor data from the at least one data acquisition device, a current state of the at least one vehicle, determining, via second sensor data acquired by a second data acquisition device, a second current state of the at least one vehicle, and
thereby comparing the current state of the at least one vehicle against the second current state to detect anomaly therein.

### DETAILED DESCRIPTION OF THE DRAWINGS

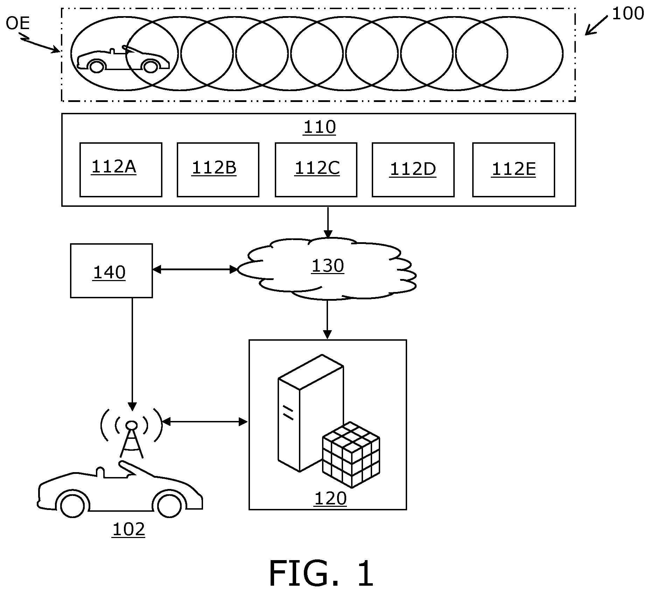

Referring to FIG. 1, illustrated is a schematic view of the system 100 for safety monitoring of the at least one vehicle 102 within the operational environment OE, in accordance with one or more embodiments of the present disclosure. Herein, the safety monitoring system 100 comprises at least a data acquisition module 110 and a processing unit 120. As shown, the data acquisition module 110 comprises at least one data acquisition device 112 configured to acquire sensor data associated with at least one vehicle 102 and one or more objects 104 positioned within the operational environment OE. The operational environment OE in which the vehicle 102 moves is delimited in FIG. 1, by a dotted line. The processing unit 120 communicably coupled to the data acquisition module 110 via a communication interface 130, is configured to pre-process the acquired sensor data to generate optimized sensor data. The processing unit 120 is further configured to process the optimized sensor data via a consistency check algorithm to detect an anomaly within the optimized sensor data. The processing unit 120 is further configured to transmit an override command signal to a vehicle control unit 140 of the at least one vehicle 102 based on the detected anomaly.

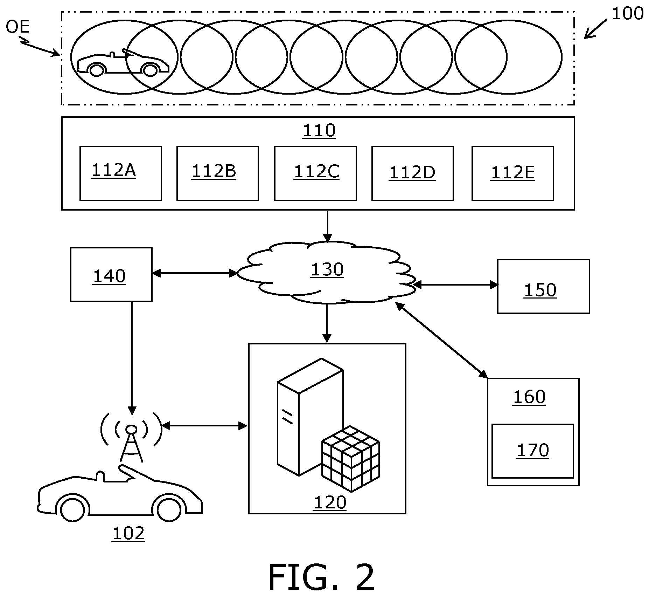

Referring to FIG. 2, illustrated is a schematic view of the safety monitoring system 100, in accordance with another embodiment of the present disclosure. It will be appreciated that FIG. 2 is to be read in conjunction with FIG. 1. Herein, the safety monitoring system 100 further comprises a performance monitoring unit 150, communicably coupled to the at least one data acquisition device 112 via the communication interface 130. The performance monitoring unit 150 is configured to transmit, periodically, a diagnostic signal to the at least one data acquisition device 112, determine a response time associated with the transmitted diagnostic signal, and compare the response time against a predefined time threshold to detect an anomaly with the associated data acquisition device from the at least one data acquisition device 112. The system 100 further comprises a redundancy management unit 160 configured to switch the at least one data acquisition device 112 associated with the detected anomaly with one or more backup data acquisition devices 170, or supplement one or more backup data acquisition devices 170 to the at least one data acquisition device 112.

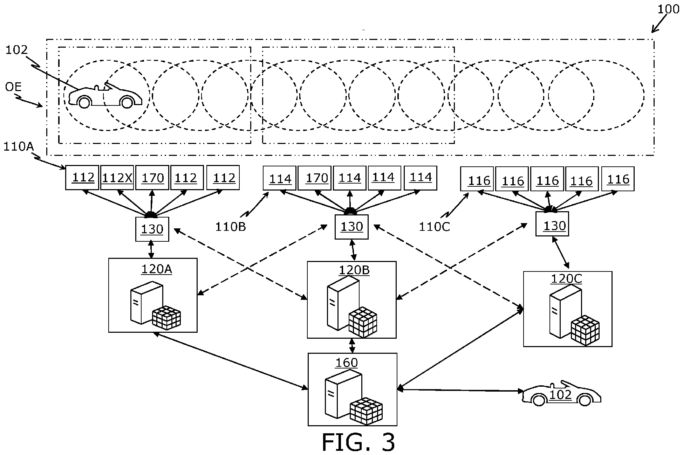

Referring to FIG. 3, illustrated is another schematic view of the system 100 for safety monitoring of the at least one vehicle 102 in the operational environment OE, in accordance with one or more embodiments of the present disclosure. Herein, the safety monitoring system 100 comprises three data acquisition modules 110A to 110C and a processing unit 120 comprising three sub-processing units 120A to 120C. As shown, each data acquisition module 110A, 110B, 110C comprises at least one data acquisition device 112, 114, 116, respectively, configured to acquire sensor data associated with the at least one vehicle 102 positioned within the operational environment OE. The processing unit 120 and the sub-processing units 120A to 120C are communicably coupled to each data acquisition module 110A to 110C, respectively, via a common communication interface 130. Herein, in case of failures or anomalies within any of the sub-processing units 120A or 120B or 120C or the data acquisition modules 110A or 110B or 110C, any of the data acquisition modules may be replaced or supplemented with respective replacements as part of the redundancy mechanism provided by the present disclosure. The system 100 further comprises the redundancy management unit 160 configured to switch the at least one data acquisition device 112X associated with the detected anomaly with one or more backup data acquisition devices 170, or supplement one or more backup data acquisition devices 170 to the at least one data acquisition device 112.

In an exemplary scenario, referring to FIGS. 1-3, the safety monitoring system 100 is deployed within an automated vehicle marshalling yard, where multiple autonomous vehicles 102 are guided through designated routes by infrastructure-based sensors. The system 100 includes multiple data acquisition modules 110A-110C, each equipped with LiDAR-based data acquisition devices 112, 114 and 116, which are spatially distributed along the vehicle path within the operational environment OE to ensure continuous perception coverage. Each LiDAR-based data acquisition device is configured to generate a three-dimensional point cloud representing its surrounding environment. These sensors are installed with partially overlapping fields of view, so that each sensor is covering a zone or an area within the operational environment OE (the areas are illustrated as circles within the operational environment in FIGS. 1-3), forming a coverage corridor along the movement path of the vehicle 102. As the vehicle moves through the environment OE, any given spatial region is simultaneously observed by at least two LiDAR units, ensuring redundant and validated visibility of both static and dynamic objects. The sensor data from each data acquisition module is processed by corresponding sub-processing units 120A to 120C. The performance monitoring unit 150, acting as a supervisory module, continuously receives status signals or diagnostic signal (or heartbeat signals), e.g., periodic functionality confirmation messages, from each sub-processing unit and data acquisition device. These signals confirm the operational state and responsiveness of each sensor (node) and processing element. If, or when, during operation, the data acquisition device 114 associated with module 110B fails to transmit its status signal within a predefined time window, the performance monitoring unit 150 identifies the anomaly as a potential hardware or communication fault. In response, it evaluates the sensor coverage map and determines whether the affected region remains visible to adjacent LiDAR devices 112 and 116. If redundant coverage is verified, the system may continue operating with adjusted parameters. If not, it triggers the redundancy management unit 160 to activate a backup data acquisition device 170, thereby restoring full perception capability.

In another exemplary scenario, referring to FIGS. 1-3, the processing unit 120 may issue an override command signal to the vehicle control unit 140 of the affected autonomous vehicle 102, instructing it to slow down, stop, or take an alternate path, depending on the coverage gap severity. The incident is logged, and a diagnostic notification is transmitted to a performance monitoring unit 150.

In yet another scenario, referring to FIGS. 1-3, the performance monitoring unit 150 detects a mismatch between expected and actual processing delay of sub-processing unit 120C, suggesting thermal throttling or software malfunction. The performance monitoring unit 150 initiates safety fallback procedures, either routing tasks to a processor, or placing the vehicle in a safe state.

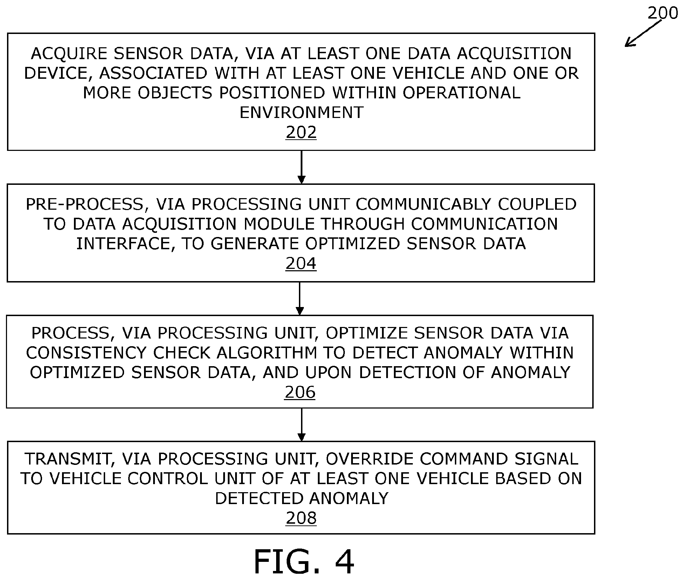

Referring to FIG. 4, illustrated is a diagrammatic flowchart depicting steps involved in a method 200 for safety monitoring of at least one vehicle 102 in an operational environment OE, in accordance with one or more embodiments of the present disclosure. The method 200 comprises the following steps 202, 204, 206 and 208. As shown, at a step 202, the method 200 comprises acquiring sensor data, via at least one data acquisition device 112, associated with at least one vehicle 102 and one or more objects 104 positioned within operational environment OE. At a step 204, the method 200 further comprises pre-processing, via processing unit 120 communicably coupled to data acquisition module 110 via the communication interface 130, to generate optimized sensor data. At a step 206, the method 200 comprises processing, via processing unit 120, optimize sensor data via consistency check algorithm to detect anomaly within optimized sensor data. And, at a step 208, the method 200 comprises transmission, via processing unit 120, an override command signal to vehicle control unit 140 of at least one vehicle 102 based on detected anomaly.

## Claims

1. A system (100) for safety monitoring of at least one vehicle (102) in an operational environment (OE), comprising:
- a data acquisition module (110) comprising at least one data acquisition device (112) configured to acquire sensor data associated the at least one vehicle and one or more objects (104) positioned within the operational environment,
- a processing unit (120), communicably coupled to the data acquisition module (110) via a communication interface (130), configured to:
- pre-process the acquired sensor data to generate optimized sensor data;
- process the optimized sensor data via a consistency check algorithm to detect an anomaly within the optimized sensor data, and upon detection of the anomaly, and
- transmit an override command signal to a vehicle control unit (140) of the at least one vehicle based on the detected anomaly.

2. The system (100) of claim 1, wherein to detect the anomaly via the consistency check algorithm, the processing unit (120) is configured to:
- compare the optimized sensor data against a predefined sensor threshold, or
- compare the optimized sensor data against a predefined reference data, or
- cross-validate the optimized sensor data associated with the at least one data acquisition device (112) against sensor data from another data acquisition device (114).

3. The system (100) of claim 2, wherein to cross-validate the optimized sensor data, the processing unit (120) is further configured to:
- determine, via the sensor data from the at least one data acquisition device (112), a current state of the at least one vehicle (102);
- determine, via second sensor data acquired by a second data acquisition device (116), a second current state of the at least one vehicle;
- compare the current state of the at least one vehicle against the second current state to detect anomaly therein.

4. The system (100) of claim 1, further comprising a performance monitoring unit (150), communicably coupled to the at least one data acquisition device (112) via the communication interface (130), configured to:
- transmit, periodically, a diagnostic signal to the at least one data acquisition device;
- determine a response time associated with the transmitted diagnostic signal; and
- compare the response time against a predefined time threshold to detect an anomaly with the associated data acquisition device from the at least one data acquisition device (112).

5. The system (100) of claim 1 or 4, wherein the performance monitoring unit (150) is further configured to:
- transmit a diagnostic signal to the at least one data acquisition device (112);
- receive and process the diagnostic signal reverted from the at least one data acquisition device to determine one or more signal parameters associated therewith, wherein the one or more signal parameters include at least one of: a signal strength ratio and a packet loss rate; and
- compare the one or more signal parameters against a corresponding predefined signal threshold to detect the anomaly.

6. The system (100) of claim 1, wherein the at least one data acquisition device (112) is operatively coupled to a voltage sensor configured to measure voltage levels (V) associated therewith, and wherein the processing unit (120) is configured to:
- compare the measured voltage level associated with each of the at least one data acquisition device against a predefined voltage threshold range, and
- based on the comparison, determine an operational status of the at least one data acquisition device, wherein the operational status is one of: active, partially active, or inactive.

7. The system (100) of any of the preceding claims, wherein the processing unit (120) is further configured to analyze the detected anomaly to determine at least one of a type and a severity of the detected anomaly, and wherein the detected anomaly includes at least one of: a signal drift, a sensor misalignment, and a sensor dropout.

8. The system (100) of any of the preceding claims, wherein the processing unit (120) is further configured to:
- determine, via a third data acquisition device (118), a third current state of the at least one vehicle (102),
- compare the third current state against the current state of the at least one vehicle to detect the anomaly, and if detected, flag the associated at least one data acquisition device (112X) for manual inspection.

9. The system (100) of any of the preceding claims, wherein, upon detection of the anomaly, the processing unit (120) is further configured to:
- identify the at least one data acquisition device (112X) associated with the detected anomaly;
- determine a root cause of the detected anomaly based on at least one of: the type of the anomaly, location, and number of the at least one data acquisition device (112X) associated with the detected anomaly; and
- trigger either a corrective signal or the override command signal based on the determined root cause.

10. The system (100) of claim 1 or 9, wherein:
- the triggered corrective signal is configured to initiate at least one of power cycling of the at least one data acquisition device (112X) and resetting thereof; and
- the override command signal is configured to either initiate an emergency braking action to halt the at least one vehicle (102) or alter a current state thereof.

11. The system (100) of any of the preceding claims, wherein the at least one data acquisition device (112) includes at least one of: a LiDAR sensor, a camera, a radar sensor, an odometer, a proximity sensor, a GPS, an accelerometer, and a gyroscope.

12. The system (100) of any of the preceding claims, wherein the processing unit (120) is further configured to:
- associate a timestamp with the detected anomaly;
- aggregate the detected anomaly and the associated timestamp in a database to generate log data;
- process the log data via at least one machine learning algorithm to identify anomalistic patterns therein;
- utilize the identified anomalistic patterns to detect the anomaly in a given sensor data.

13. The system of any of the preceding claims, further comprising a redundancy management unit (160) configured to:
- switch the at least one data acquisition device (112X) associated with the detected anomaly with one or more backup data acquisition devices (170); or
- supplement one or more backup data acquisition devices (170) to the at least one data acquisition device (112).

14. A method (200) for safety monitoring of at least one vehicle (102) in an operational environment, comprising:
- acquiring sensor data, via at least one data acquisition device (112), associated with the at least one vehicle and one or more objects positioned within the operational environment;
- pre-processing, via a processing unit (120) communicably coupled to the data acquisition module through a communication interface (130), to generate the optimized sensor data;
- processing, via the processing unit, the optimized sensor data via a consistency check algorithm to detect an anomaly within the optimized sensor data, and upon detection of the anomaly; and
- transmitting, via the processing unit, an override command signal to a vehicle control unit (140) of the at least one vehicle based on the detected anomaly.

15. The method (200) of claim 14, wherein processing the optimized sensor data to detect the anomaly comprises:
- comparing the optimized sensor data against a predefined sensor threshold, or
- comparing the optimized sensor data against a predefined reference data, or
- cross-validating the optimized sensor data associated with the at least one data acquisition device (112) against sensor data from another data acquisition device.

16. The method (200) of claim 15, wherein the cross-validating the optimized sensor data comprises:
- determining, via the sensor data from the at least one data acquisition device (112), a current state of the at least one vehicle (102),
- determining, via second sensor data acquired by a second data acquisition device, a second current state of the at least one vehicle, and
- comparing the current state of the at least one vehicle against the second current state to detect anomaly therein.
